# EUROPÄISCHE PATENTSCHRIFT

(11) **EP 2 705 319 B1**
(45) Veröffentlichungstag und Bekanntmachung des Hinweises auf die Patenterteilung: **08.07.2015**
(21) Anmeldenummer: 12717756.6
(22) Anmeldetag: 02.05.2012
(51) Int. Cl.: F28F 9/18, F02B 29/04, F28D 21/00

(54) **WÄRMETAUSCHER, INSBESONDERE LADELUFTKÜHLER**
HEAT EXCHANGER, IN PARTICULAR INTERCOOLER
ÉCHANGEUR DE CHALEUR, EN PARTICULIER REFROIDISSEUR D'AIR DE SURALIMENTATION

(30) Priorität: 02.05.2011 DE 102011075071
(43) Veröffentlichungstag der Anmeldung: 12.03.2014
(73) Patentinhaber: MAHLE Behr GmbH & Co. KG, 70469 Stuttgart (DE)
(72) Erfinder: AUGENSTEIN, Claus, 70839 Gerlingen (DE); BRONNER, Harald, 75378 Bad Liebenzell Unterhaugstett (DE); POSSET, Stephan, 74206 Bad Wimpfen (DE); KLIPPHAHN, Silvia-Helena, 70599 Stuttgart (DE); TYULYUKOVSKIY, Eduard, 70563 Stuttgart (DE)
(74) Vertreter: Grauel, Andreas
(86) Internationale Anmeldenummer: PCT/EP2012/057982
(87) Internationale Veröffentlichungsnummer: WO 2012/150237

(56) Entgegenhaltungen:
- EP-A1- 0 745 823
- EP-A2- 0 389 970
- EP-A2- 2 151 655
- DE-A1-102007 059 673
- US-A- 5 366 006

## Beschreibung

Die Erfindung betrifft einen Wärmetauscher, insbesondere einen Ladeluftkühler, umfassend mindestens einen Sammelkasten, welcher einen Boden aufweist, wobei annähernd senkrecht zum Boden mindestens ein Rohr in einen, aus dem Boden herausragenden Durchzug eingreift, der ein Rohrende umfasst, wobei der Durchzug einen an den Außenumfang des Rohres angepassten rechteckähnlichen Querschnitt aufweist.

Um eine Leistungssteigerung eines Verbrennungsmotors zu erzielen, kann die der Verbrennung zuzuführende Luft beispielsweise mit einem Turbolader verdichtet werden, bevor sie den Brennkammern des Verbrennungsmotors zugeführt wird. Die Verdichtung der Luft bringt jedoch gleichzeitig eine erhebliche Erwärmung derselben mit sich, was für einen optimalen Ablauf des Verbrennungsprozesses nachteilig ist. So kann beispielsweise eine verfrühte Zündung oder eine erhöhte Stickoxidemission durch die Erwärmung ausgelöst werden. Um die nachteiligen Folgen von der, der Verbrennung zugeführten überhitzten Luft zu vermeiden, wird einem Turbolader ein als Ladeluftkühler ausgebildeter Wärmetauscher nachgeschaltet, mit dem die komprimierte Luft vor ihrer Verbrennung auf eine zulässige Temperatur abgekühlt werden wird.

Aus der DE 103 43 239 A1 ist ein Wärmeübertrager bekannt, der Rohre und mindestens einen Sammelkasten aufweist, wobei der Sammelkasten zumindest einen Rohrboden mit Durchzügen umfasst und die Durchzüge von Flanken eingefasst sind. Dadurch wird die mechanische Belastung der Rohr-Boden-Verbindung ohne Mehraufwand an Material verringert. Bei reduzierten Rohrwandstärken bzw. reduzierten Bodendicken ist die Festigkeit der Rohr-Böden-Verbindung nicht immer gewährleistet, was zu einer reduzierten Lebensdauer eines Ladeluftkühlers führt.

Die für den Ausfall des Ladeluftkühlers verantwortlichen Spannungen entstehen dabei durch ungleichmäßige Ausdehnung der einzelnen Bauteile des Ladeluftkühlers und der sich daraus resultierenden Verformung bzw. Verschiebung. Die Spannungen sind auf die unterschiedlichen thermischen Bedingungen an dem Ladeluftkühler zurückzuführen.

Aus der DE 10 2007 059 673 A1 ist ein Wärmetauscher zum Austausch zwischen einem ersten Fluid und einem zweiten Fluid bekannt, bei welchem die Dauerhaltbarkeit des Wärmetauschers gegenüber Temperaturwechselbeanspruchung dadurch verlängert wird, dass ein Abstandswert wenigstens an einem Übergang zwischen der Rohrschmalseite und der Rohrbreitseite derart geringer ist als ein Abstandswert an der Rohrbreitseite, so dass Spannungen im Bereich des Überganges verringert werden.

Eine andere Ausgestaltung der Durchzugsgeometrie ist aus der DE 10 2007 016 528 A1 bekannt, wo eine Kopfplatte zur Verwendung in einem Wärmetauscher dargestellt ist. Um die Belastung der Rohr-Boden-Verbindung zu verbessern, ist der Durchzug so geformt, dass er sich an das Äußere des zugehörigen Rohres anpasst.

Eine weiter reduzierte Rohrwandstärke unter 0,5 mm bzw. weiter reduzierte Bodendicken unter 3 mm führen aber zu höheren Verformungen und Verschiebungen des Ladeluftkühlers insbesondere in dem Rohr-Boden-Bereich. Dabei entstehen insbesondere in den Rohreckradien, dem Übergangsbereich zwischen dem relativ steifen Durchzug und dem dünnen Rohr, Spitzenspannungen, die zu Abrissen zwischen Boden und Rohr führen. Deshalb sind die Rohrwandstärke und die Bodendicke nicht weiter reduzierbar.

Der Erfindung liegt somit die Aufgabe zugrunde, einen Wärmetauscher anzugeben, bei welchem trotz der Verwendung von Rohren mit noch geringerer Rohrwanddicke und Böden mit weiter verringerter Wandstärke die Lebensdauer des Wärmetauschers ohne Einbußen erhalten bleibt bzw. weiter verlängert werden kann.

Erfindungsgemäß wird die Aufgabe dadurch gelöst, dass eine Wandstärke des Durchzuges mindestens in einem Eckbereich, insbesondere werkzeugformend, gegenüber einer Schmalseite und einer Breitseite ausgedünnt ist. Dies hat den Vorteil, dass durch die gezielte Ausdünnung des Durchzuges in diesem Bereich der Steifigkeitssprung zwischen dem steifen Durchzug und dem dünnwandigen Rohr reduziert wird. Dabei wird die infolge der Temperatureinwirkungen hervorgerufene Verformung im Rohreckbereich des Wärmetauschers auf einen größeren Bereich des Durchzuges verteilt und somit die Spitzenspannung reduziert. Als Folge wird die Lebensdauer des Wärmetauschers trotz Verringerung der Rohrwanddicken und/oder der Bodendicken verlängert. Unter der werkzeugformenden Verdünnung soll verstanden werden, dass der Durchzug während des Bearbeitungsprozesses vorteilhafterweise beidseitig an dem eingesetzten Werkzeug anliegt, was eine Kontrolle der Dicke des Durchzuges durch das Werkzeug bedingt.

Vorteilhafterweise verläuft die ausgedünnte Wandstärke des Eckbereiches radial zum Rohr. Mittels dieser Ausgestaltung wird dieser Eckbereich durch die ausgedünnte Wandstärke so weich wie möglich gestaltet, um sich den angreifenden Spannungen anzupassen und einen Abriss des Rohres in diesem Bereich zuverlässig zu verhindern.

In einer Ausgestaltung erstreckt sich die ausgedünnte Wandstärke ausgehend von dem Eckbereich des Durchzuges mindestens teilweise in die Schmalseite und/oder die Breitseite des Durchzuges. Somit ist die ausgedünnte Wandstärke nicht auf den Eckbereich beschränkt. Durch den Übergang in die Schmalseite bzw. Breitseite des Durchzuges wird die Ausdünnung wieder an die normale Wandstärke der Schmalseite und der Breitseite angepasst, wodurch ein definierter Übergang zwischen Boden und Rohr im Bereich des Durchzuges ermöglicht wird, da der Durchzug in diesem Bereich elastisch ausgebildet ist. Auf zusätzliche Fertigungsschritte, beispielsweise in Form der Montage einer Rohrverstärkung bzw. eines Blockfertigungsprozesses, kann unter Beibehaltung des aus thermodynamischen Aspekten heraus optimalen Rechteckquerschnittes des Rohres verzichtet werden, was eine Senkung der Herstellungskosten des Wärmetauschers ermöglicht.

In einer Weiterbildung ist die ausgedünnte Wandstärke des Eckbereiches kontinuierlich an die jeweilige Wandstärke der Schmalseite und/oder der Breitseite des Durchzuges angepasst. Dadurch werden die im Eckbereich des Durchzuges auftretenden Spannungen in Richtung Schmalseite bzw. Breitseite verteilt, und allmählich in diese überführt, weshalb Abrisse in diesen Bereichen zuverlässig unterbunden werden.

In einer Variante erfolgt mindestens an der Breite des Durchzuges ausgehend von der sich in die Breitseite erstreckenden, kontinuierlich zunehmenden ausgedünnten Wandstärke ein Sprung auf eine vorgegebene Wandstärke der Breitseite. Dieser Sprung ist bereits im Bereich der Breitseite positioniert, wo geringere Spannungsspitzen auftreten, so dass in diesem Bereich an der Breitseite des Durchzuges keinerlei Abrisse zu erwarten sind.

Vorteilhafterweise beträgt die verdünnte Wandstärke des Eckbereiches des Durchzuges 0,1 bis 0,8 mm. Dadurch wird ein sehr stetiger und vor allem weicher Übergang zwischen Rohr und Boden an dem Eckbereich realisiert. Obwohl der Eckbereich sehr dünnwandig ausgestaltet ist, wird die Lebensdauer des Wärmetauschers auch unter Verwendung dieser sehr dünnen, aber elastischen Wandbereiche der Durchzüge weiter verlängert.

In einer anderen Ausgestaltung verläuft die ausgedünnte Wandstärke des Eckbereiches des Durchzuges axial zum Rohr. Durch diese Ausführungsform erfolgt eine gute Abstützung des in den Durchzug eingefügten Rohres.

In einer Weiterbildung nimmt die ausgedünnte Wandstärke des Durchzuges ausgehend vom Rohr in Richtung des Bodens des Sammelkastens zu. Dadurch kann der Eckbereich so hoch wie möglich geformt werden, wodurch das Rohr sicher in dem Durchzug positioniert wird und trotzdem ein Abriss im Eckbereich verhindert wird.

In einer Weiterbildung ist die Höhe des Durchzuges im Eckbereich konstant ausgebildet. Dies erleichtert den Herstellungsprozess des Bodens mit dem Durchzug im Boden.

In einer Variante nimmt die Höhe des Durchzuges in dessen Eckbereich, insbesondere kontinuierlich, in Richtung der Breitseite zu. Dadurch wird gewährleistet, dass die Breitseite des Durchzuges eine zuverlässige Aufnahme und Stabilisierung des Rohres ermöglicht, welches in dem Durchzug eingefügt ist.

Die Erfindung lässt zahlreiche Ausführungsformen zu. Eine davon soll anhand der in der Zeichnung dargestellten Figuren näher erläutert werden.
- Figur 1:: Längsschnitt durch einen Wärmetauscher
- Figur 2:: ein Ausführungsbeispiel für eine erfindungsgemäße Rohr-Boden-Verbindung
- Figur 3:: Draufsicht auf einen Ausschnitt des Durchzuges der Rohr-Boden-Verbindung gemäß Figur 2
- Figur 4:: Ansicht des Eckbereiches des Durchzuges der Rohr-Boden-Verbindung gemäß Figur 2 aus einem 45° Winkel
- Figur 5:: Materialstärke des Durchzuges im Eckbereich gemäß Figur 2
- Figur 6:: Materialstärke des Durchzuges im Eckbereich gemäß dem Stand der Technik

Gleiche Merkmale sind mit gleichen Bezugszeichen gekennzeichnet.

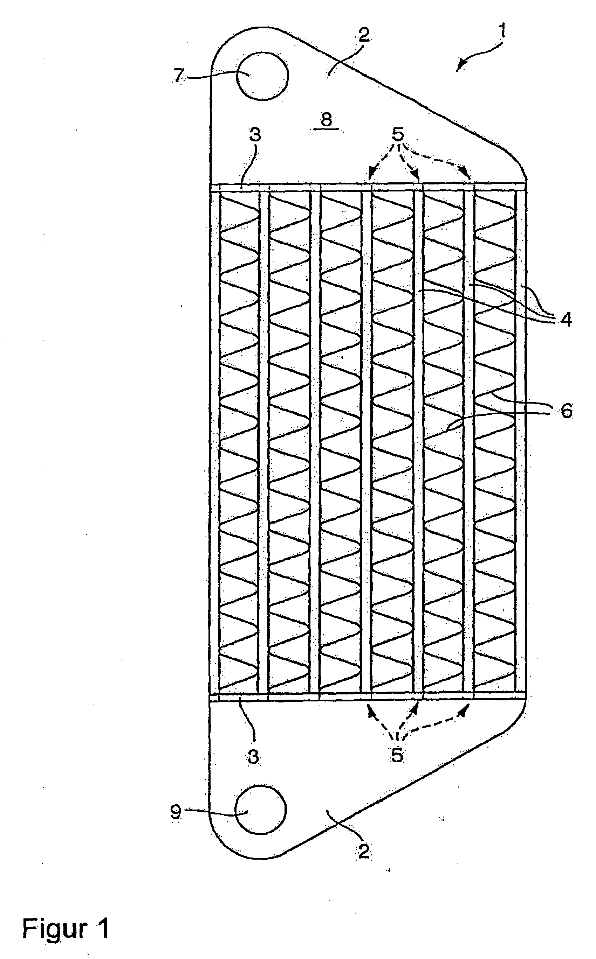

In Figur 1 ist ein Wärmetauscher 1 dargestellt, welcher zwei sich gegenüberliegende Sammelkästen 2 aufweist, wobei jeder der Sammelkästen 2 an einer Seite mit einer im Wesentlichen ebenen, plattenähnlichen Boden 3 versehen ist. Dabei sind die Sammelkästen 2 so am Wärmetauscher 1 angeordnet, dass ihre Böden 3 einander zugewandt sind und parallel zueinander verlaufen. Zwischen den Sammelkästen 2 bzw. zwischen deren Böden 3 sind senkrecht zu den Böden 3, nebeneinander liegende, parallel zueinander verlaufende Rohre 4, vorzugsweise Flachrohre, angeordnet, deren Enden die Böden 3 in dafür vorgesehenen Aussparungen 5 durchdringen und dadurch die Sammelkästen 2 miteinander kommunizierend verbinden. Zwischen benachbarten Rohren 4 sind Kühlrippen 6 angebracht, die beispielsweise zickzackförmig ausgebildet sind. Die Rohre 4 sind durch Verlöten an den Sammelkästen 2 bzw. deren Böden 3 befestigt.

Wenn der Wärmetauscher 1 als Ladeluftkühler ausgebildet ist, tritt die, von einem nicht weiter dargestellten Turbolader verdichtete heiße Luft durch eine, im oberen Sammelkasten 2 vorgesehene Einlassöffnung 7 in einen Innenraum 8 des oberen Sammelkastens 2 ein. Die zu kühlende Luft verteilt sich im Innenraum 8 und tritt in die Rohre 4 ein und durchströmt diese. Dabei findet eine Kühlung der heißen Luft statt und die abgekühlte Luft tritt an dem anderen Ende der Rohre 4 wiederum in einen Innenraum 8 des zweiten, unteren Sammelkastens 2 ein. Der untere Sammelkasten 2 enthält eine Auslassöffnung 9, durch die, die inzwischen abgekühlte Luft dem entsprechenden Verbraucher, beispielsweise dem Verbrennungsmotor zugeführt wird.

Die Abkühlung der Luft im Bereich der Rohre 4 erfolgt mit Hilfe der zwischen den Rohren 4 angeordneten Kühlrippen 6. Die Rohre 4 und die dazwischen angeordneten Kühlrippen 6 werden einer kühlenden Luftströmung ausgesetzt. Dabei wird die Wärmeenergie der, die Rohre 4 durchströmenden heißen Luft auf die Rohre 4 und von diesen auf die Kühlrippen 6 übertragen und anschließend von dem kühlenden Luftstrom abgeführt.

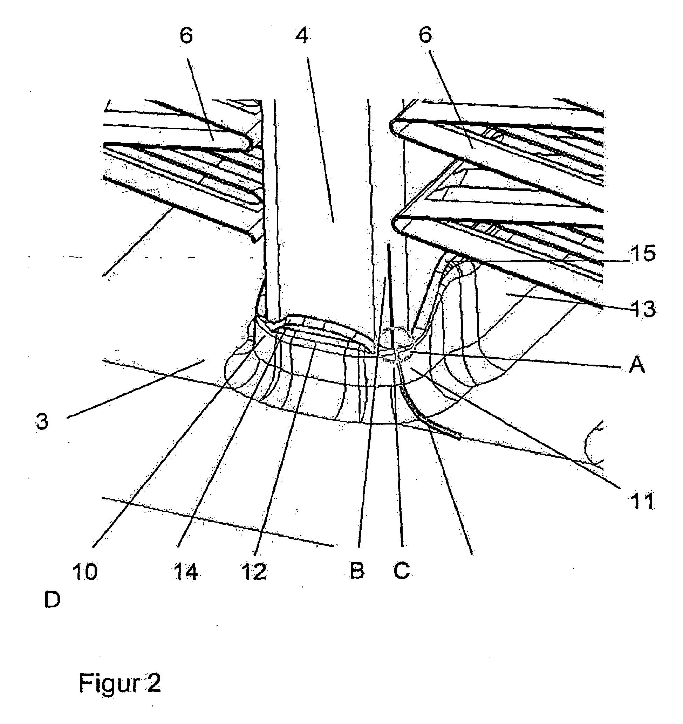

In Figur 2 ist ein Ausschnitt eines Rohres 4 dargestellt, welches an dem Boden 3 eines Sammelkastens 2 befestigt ist. Dabei ist das, einen rechteckähnlichen Querschnitt aufweisende Rohr 4 in einen Durchzug 10 geführt, welcher aus dem Boden 3 ausgestanzt ist und die nicht weiter dargestellte Öffnung 5 des Bodens 3 umgibt. Der Durchzug 10 ist somit Bestandteil des Bodens 3 und damit auch der Rohr-Boden-Verbindung. Der Eckbereich 11 des Durchzuges 10 schließt sich einerseits an eine Schmalseite 12 an, während die andere Seite des Eckbereiches 11 in einer Breitseite 13 aufgeht. Sowohl die Schmalseite 12 als auch die Breitseite 13 weisen dabei in Richtung des Rohres 4 gerichtete Einführungshilfen 14 bzw. 15 auf, welche die Montage des Rohres 4 in den Durchzug 10 unterstützen.

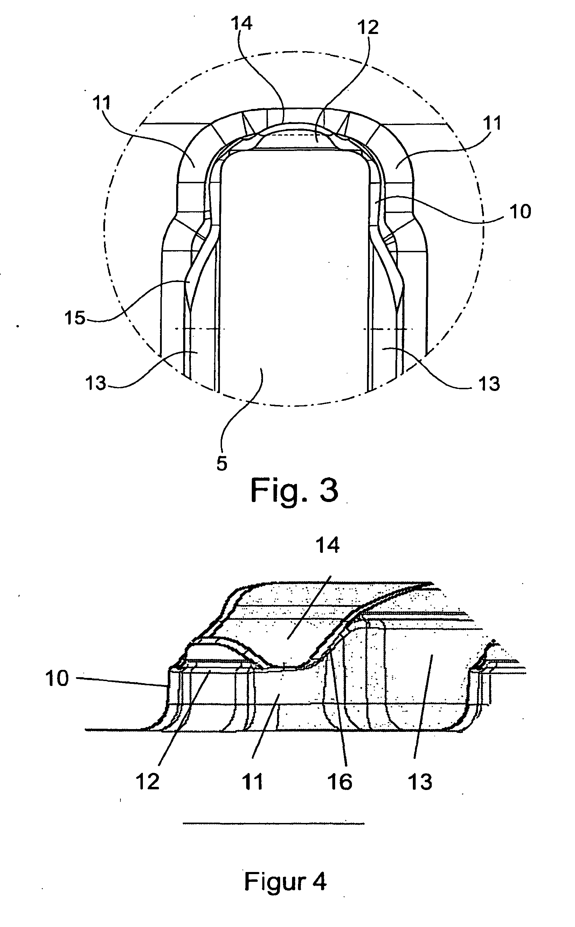

In Figur 3 ist eine Draufsicht auf die Schmalseite 12 des Durchzuges 10 aus Sicht des Rohres 4 dargestellt, wobei sich an die Schmalseite 12 beidseitig lange Breitseiten 13 erstrecken. Dabei ist angedeutet, dass der Durchzug 10 einen rechteckähnlichen Querschnitt aufweist, welcher dem Querschnitt des Rohres 4 angepasst ist und welcher unter thermodynamischen Aspekten für das Rohr 4 optimal ist. Die Breitseite 13 weist dabei eine Wandstärke von annähernd 1,5 mm auf, während die Schmalseite 12 eine Wandstärke von 1 mm besitzt. Der sich zwischen der Schmalseite 12 und der Breitseite 13 erstreckende Eckbereich 11 des Durchzuges 10 besitzt eine ausgedünnte Wandstärke gegenüber der Breitseite 13 bzw. der Schmalseite 12. Die ausgedünnte Wandstärke ist dabei kleiner als 1 mm und beträgt vorzugsweise 0,1 bis 0,8 mm.

Die ausgedünnte Wandstärke ist nicht auf den Eckbereich 11 begrenzt, sondern erstreckt sich auch in die Anfangsabschnitte der Schmalseite 12 und der Breitseite 13. Wie aus Figur 3 zu entnehmen ist, ist ein sich an den Eckbereich 11 anschließender Anfangsabschnitt von 0,5 bis 1,5 mm in der Schmalseite 12 des Durchzuges 10 als auch ein Anfangsabschnitt von 0,5 bis 5,0 mm der Breitseite 13 des Durchzuges 10, der sich ebenfalls an den Eckbereich 11 anschließt, mit der ausgedünnten Wandstärke ausgebildet. Vorteilhafterweise ist dabei die ausgedünnte Wandstärke nicht konstant mit einer Wandstärke ausgebildet, sondern die ausgedünnte Wandstärke erhöht sich von ihrer dünnsten Stelle, die genau in dem Radius des Eckbereiches 11 ausgebildet ist, bis zu einer breiteren Wandstärke, beispielsweise 0,8 mm kontinuierlich. Hat die Wandstärke dann beispielsweise in dem Anfangsabschnitt der Breitseite 13 0,8 mm erreicht, wird die Wandstärke sprunghaft auf 1,5 mm erhöht.

Die Außenfläche des Durchzuges 10 kann in diesen Eckbereich 11 bzw. den Außenabschnitten der Schmalseite 12 bzw. der Breitseite 13 parallel zur Innenkontur des Durchzuges 10 verlaufen oder kontinuierlich ansteigen. Dabei ist die Außenfläche, wie aus Figur 2 hervorgeht, leicht konisch ausgebildet.

In Figur 4 ist ein Blick auf den Eckbereich 11 des Durchzuges 10 aus einem 45° Winkel dargestellt. Daraus ist ersichtlich, dass die Höhe des Durchzuges 10 nicht konstant ausgebildet ist. Ausgehend von einer geringeren Höhe der Schmalseite 12 steigt die Höhe des Durchzuges 10 im Eckbereich 11 kontinuierlich an.

Dies gilt auch für die ausgedünnten Wandstärken der angrenzenden Anfangsabschnitte der Schmalseite 12 bzw. der Breitseite 13. Die Höhe des Durchzugs 10 liegt in dem Bereich der ausgedünnten Wandstärke idealerweise bei 3 bis 6 mm und kann auch im ausgedünnten Bereich kontinuierlich ansteigen (Anstieg 16). Eine konstante Ausbildung der Höhe über den gesamten Eckbereich 11 und die angrenzenden Anfangsabschnitte der Schmalseite 12 und der Breitseite 13 ist ebenfalls möglich.

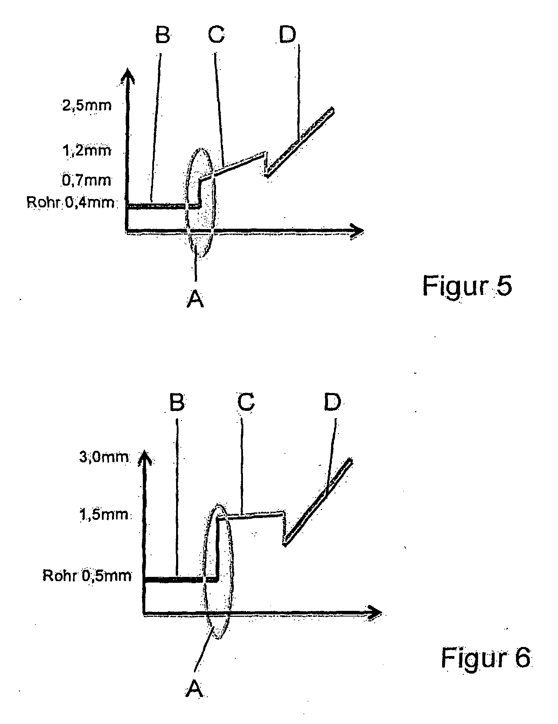

In den Figuren 5 und 6 ist mit dem Bereich A der Bereich der höchsten an den Eckbereich 11 anliegenden Spannungen des Durchzuges 10 dargestellt. In dem Bereich A, wo die höchsten Spannungsspitzen auftreten, ist bei der vorliegenden Erfindung die Wandstärke des Durchzuges 10 am dünnsten ausgebildet und liegt beispielsweise bei 0,3 mm.

Aufgrund der Verringerung des Materialdickensprungs im Eckbereich 11 durch die ausgedünnte Wandstärke des Durchzugs 10 können die hohen Spannungen und damit auch die Spannungsspitzen, gegenüber dem Stand der Technik deutlich reduziert werden, obwohl die Dicke des Bodens 3 als auch die Wandstärke des Rohres 4 stark reduziert werden.

Aufgrund der Vermeidung zusätzlichen Materials und zusätzlicher Fertigungsschritte wird aufgrund der vorliegenden Erfindung unter Beibehaltung des aus thermodynamischen Aspekten heraus optimalen Rechteckquerschnittes des Flachrohres 4 ein Wärmetauscher 1 vorgeschlagen, bei welchem die Wandstärken sowohl des Rohres als auch der Bodenplatte 3 gegenüber dem Stand der Technik weiter verringert werden, was die Kosten des Wärmetauschers reduziert. Trotz dieser Materialverringerung wird die Lebensdauer des Wärmetauschers verlängert.

## Patentansprüche

1. Wärmetauscher, insbesondere ein Ladeluftkühler, umfassend mindestens einen Sammelkasten (2), welcher einen Boden (3) aufweiset, wobei annähernd senkrecht zum Boden mindestens ein Rohr (4) in einen, aus dem Boden (3) herausragenden Durchzug (10) eingreift, der ein Rohrende umfasst, wobei der Durchzug (10) einen, an den Außenumfang des Rohres (4) angepassten rechteckähnlichen Querschnitt aufweist, **dadurch gekennzeichnet, dass** eine Wandstärke des Durchzuges (10) mindestens in einem Eckbereich (11), insbesondere werkzeugformend, gegenüber einer Schmalseite (12) und einer Breitseite (13) ausgedünnt ist.

2. Wärmetauscher nach Anspruch 1, **dadurch gekennzeichnet, dass** die ausgedünnte Wandstärke des Eckbereiches (11) des Durchzuges (10) radial zum Rohr (4) verläuft.

3. Wärmetauscher nach Anspruch 2, **dadurch gekennzeichnet, dass** die ausgedünnte Wandstärke ausgehend von dem Eckbereich (11) des Durchzuges (10) sich mindestens teilweise in die Schmalseite (12) und/öder die Breitseite (13) des Durchzuges (10) erstreckt.

4. Wärmetauscher nach Anspruch 3, **dadurch gekennzeichnet, dass** die ausgedünnte Wandstärke des Eckbereiches (11) kontinuierlich an die jeweilige Wandstärke der Schmalseite (12) und/oder der Breitseite (13) des Durchzuges (10) angepasst ist.

5. Wärmetauscher nach Anspruch 4, **dadurch gekennzeichnet, dass** mindestens an der Breitseite (13) des Durchzuges (10) ausgehend von der, sich in die Breitseite (13) erstreckenden, kontinuierlich zunehmenden, ausgedünnten Wandstärke ein Sprung auf eine vorgegebene Wandstärke der Breitseite (13) erfolgt.

6. Wärmetauscher nach mindestens einem der Ansprüche 2 bis 5, **dadurch gekennzeichnet, dass** die ausgedünnte Wandstärke des Eckbereiches (11) des Durchzuges (10) 0,1 bis 0,8 mm beträgt.

7. Wärmetauscher nach mindestens einem der vorhergehenden Ansprüche, **dadurch gekennzeichnet, dass** die ausgedünnte Wandstärke des Eckbereiches (11) des Durchzuges (10) axial zum Rohr (4) verläuft.

8. Wärmetauscher nach Anspruch 7, **dadurch gekennzeichnet, dass** die ausgedünnte Wandstärke des Durchzuges (10) ausgehend vom Rohr (4) in Richtung des Bodens (3) des Sammelkastens (2) zunimmt.

9. Wärmetauscher nach mindestens einem der vorhergehenden Ansprüche, **dadurch gekennzeichnet, dass** eine Höhe des Durchzuges (10) in dessen Eckbereich (11) konstant ausgebildet ist.

10. Wärmetauscher nach mindestens einem der vorhergehenden Ansprüche 1 bis 7, **dadurch gekennzeichnet, dass** die Höhe des Durchzuges (10) in dessen Eckbereich (11) insbesondere kontinuierlich in Richtung der Breitseite (13) zunimmt.

## Claims

1. Heat exchanger, in particular an charge-air cooler, comprising at least one header box (2) that has a plate (3), wherein at least one tube (4) approximately perpendicular to the plate engages a rim hole (10) that projects out of the plate (3) and surrounds a tube end, wherein the rim hole (10) has a quasi-rectangular cross-section matched to the outer circumference of the tube (4), **characterized in that** a wall thickness of the rim hole (10) is reduced in at least one corner region (11), in particular by tool forming, relative to a narrow side (12) and a wide side (13).

2. Heat exchanger according to claim 1, **characterized in that** the reduced wall thickness of the corner region (11) of the rim hole (10) extends radially with regard to the tube (4).

3. Heat exchanger according to claim 2, **characterized in that**, starting from the corner region (11) of the rim hole (10), the reduced wall thickness extends at least partially into the narrow side (12) and/or the wide side (13) of the rim hole (10).

4. Heat exchanger according to claim 3, **characterized in that** the reduced wall thickness of the corner region (11) is continuously matched to the relevant wall thickness of the narrow side (12) and/or wide side (13) of the rim hole (10).

5. Heat exchanger according to claim 4, **characterized in that**, at least on the wide side (13) of the rim hole (10), starting from the continuously increasing, reduced wall thickness that extends into the wide side (13), an abrupt transition to a specified wall thickness of the wide side (13) takes place.

6. Heat exchanger according to at least one of claims 2 through 5, **characterized in that** the reduced wall thickness of the corner region (11) of the rim hole (10) is 0.1 to 0.8 mm.

7. Heat exchanger according to at least one of the preceding claims, **characterized in that** the reduced wall thickness of the corner region (11) of the rim hole (10) extends axially with respect to the tube (4).

8. Heat exchanger according to claim 7, **characterized in that** the reduced wall thickness of the rim hole (10) increases starting from the tube (4) and proceeding in the direction of the plate (3) of the header box (2).

9. Heat exchanger according to at least one of the preceding claims, **characterized in that** a height of the rim hole (10) is made constant in its corner region (11).

10. Heat exchanger according to at least one of the preceding claims 1 through 7, **characterized in that** the height of the rim hole (10) in its corner region (11) increases, in particular continuously, toward the wide side (13).

## Revendications

1. Echangeur de chaleur, en particulier refroidisseur d'air de suralimentation, comprenant au moins un bac collecteur (2) qui présente un fond (3), où au moins un tube (4) pénètre, de façon presque perpendiculaire au fond, dans un passage (10) dépassant du fond (3), passage qui comprend une extrémité tubulaire, où le passage (10) présente une section sensiblement rectangulaire adaptée à la circonférence extérieure du tube (4), **caractérisé en ce qu'**une épaisseur de paroi du passage (10), au moins dans une zone angulaire (11), en particulier formant un outil, est amincie par rapport à un petit côté (12) et à un grand côté (13).

2. Echangeur de chaleur selon la revendication 1, **caractérisé en ce que** l'épaisseur de paroi, amincie, de la zone angulaire (11) du passage (10) s'étend radialement par rapport au tube (4).

3. Echangeur de chaleur selon la revendication 2, **caractérisé en ce que** l'épaisseur de paroi amincie s'étend, à partir de la zone angulaire (11) du passage (10), au moins partiellement dans le petit côté (12) et / ou dans le grand côté (13) du passage (10).

4. Echangeur de chaleur selon la revendication 3, **caractérisé en ce que** l'épaisseur de paroi, amincie, de la zone angulaire (11) est adaptée de façon continue à l'épaisseur de paroi respective du petit côté (12) et / ou du grand côté (13) du passage (10).

5. Echangeur de chaleur selon la revendication 4, **caractérisé en ce que**, au moins sur le grand côté (13) du passage (10), une discontinuité se produit sur une épaisseur de paroi prédéfinie du grand côté (13), en partant de l'épaisseur de paroi amincie s'étendant dans le grand côté (13) et augmentant de façon continue.

6. Echangeur de chaleur selon au moins l'une quelconque des revendications 2 à 5, **caractérisé en ce que** l'épaisseur de paroi, amincie, de la zone angulaire (11) du passage (10) est comprise entre 0,1 mm et 0,8 mm.

7. Echangeur de chaleur selon au moins l'une quelconque des revendications précédentes, **caractérisé en ce que** l'épaisseur de paroi, amincie, de la zone angulaire (11) du passage (10) s'étend axialement par rapport au tube (4).

8. Echangeur de chaleur selon la revendication 7, **caractérisé en ce que** l'épaisseur de paroi, amincie, du passage (10) augmente à partir du tube (4), en direction du fond (3) du bac collecteur (2).

9. Echangeur de chaleur selon au moins l'une quelconque des revendications précédentes, **caractérisé en ce qu'**une hauteur du passage (10) est configurée en étant constante dans la zone angulaire (11) dudit passage.

10. Echangeur de chaleur selon au moins l'une quelconque des revendications 1 à 7, **caractérisé en ce que** la hauteur du passage (10) augmente dans la zone angulaire (11) dudit passage, en particulier de façon continue en direction du grand côté (13).
